# EUROPEAN PATENT APPLICATION

(11) **EP 4 300 078 A1**
(43) Date of publication of application: **03.01.2024**
(21) Application number: 22181220.9
(22) Date of filing: 27.06.2022
(51) Int. Cl.: G01N 21/05, G01N 21/25, G01N 21/03, G01N 21/15

(54) **FLOW CELL FOR COLOUR MEASUREMENT SYSTEM**

(71) Applicant: Tintometer GmbH, 44287 Dortmund (DE)
(72) Inventor: Clarke, Peter, Amesbury, SP4 7GR (GB); Penn, Amy, Amesbury, SP4 7GR (GB); Barnes, Nicholas, Amesbury, SP4 7GR (GB); Garwood, Thomas, Amesbury, SP4 7GR (GB)
(74) Representative: Prinz & Partner mbB

(57) **Abstract**

A flow cell for a colour measurement system is described that comprises a body with a fluid inlet and a fluid outlet linked by a fluid pathway. An entrance window for allowing light transmission into the flow cell is provided, along with a coupler configured to couple a light source to the flow cell. The entrance window is fixedly coupled to the body of the flow cell, and the coupler is carried by a coupler mount that attaches to the body of the flow cell independently of the entrance window.

## Description

### Field

The present invention relates to a flow cell for a colour measurement system, in particular to for colour measurement systems employed in continuous monitoring of colour quality throughout a manufacturing process.

### Background

Flow cells are used in colour measurement systems for continuous monitoring of colour quality in a manufacturing process, for example by edible oil refineries. Such systems are typically used in refineries and other processes with have a flow of liquid, and the colour of the liquid needs to be constantly measured and monitored. Colour measurement systems can provide objective colour data in near real-time, which can be fed back for automatic process control and optimisation. In particular, the colour measurement systems can be used for the measurement of constituent concentrations, early detection of trace contaminants and quality assurance analysis.

A flow cell is provided through which the liquid passes. A light beam is passed through the liquid as it flows through the flow cell. Light is collected from the beam after it has passed through the flow cell, and the colour of the liquid determined from a spectral analysis of the collected light.

The flow cell is isolated from the measurement system by optical fibres that are used to connect the flow cell to the light source(s) and detector(s) of the measurement system. Typically, an optical fibre delivers light to an entrance window provided in the body of the flow cell, and light is collected after passing through an exit window provided in the body of the flow cell, with the flow path of the liquid extending between the entrance window and the exit window. The light is collected with a lens and directed to another optical fibre and on to a detector.

The entrance optical fibre is held in position to aim the light beam at the receiving lens such that the light beam travels along an optical axis that extends along the length of the entrance optical fibre, through the entrance window into the body of the flow cell and then exits via the exit window, where it should then pass through the centre of the collection lens and along the length of the exit optical fibre to the detector. The entrance and exit optical fibres are mounted to the entrance and exit windows. This gives rise to a problem in achieving a high level of alignment between the entrance optical fibre and the desired optical axis through the centre of the collection lens and along the length of the exit optical fibre. This is because the entrance and exit windows are mounted on resilient gaskets to provide the necessary seal to prevent fluid leaks. Usually, an optical coupler is used to hold each of the optical fibres adjacent to the entrance and exit windows, and this optical coupler must be provided with a multi-axis adjustable alignment mechanism to compensate for misalignment introduced as the gaskets are compressed.

The constant flow of liquid and constant measurement provides real-time data on the colour of the liquid, and hence quickly reflects any changes in colour. The length of the flow cell is selected to provide a path length between the entrance and exit windows that is sufficient to measure the colour of the liquid to a required accuracy. A longer path length and hence flow cell is used for lighter coloured liquids to improve the colour depth and therefore the resolution between colours. The flow of liquid through the flow cell also affects the colour measurement, and achieving adequate control of the flow presents another problem. Smooth rather than turbulent flow provides better accuracy, along with consistent flow across the entire flow path. Dead spots in the flow path results in colour measurement of a mixture of liquid produced over a relatively wide time period, and so affects the accuracy of the colour determination for the liquid at that moment in time: conversely, minimising dead spots ensures that the colour measurement provides a better snapshot of the liquid passing through the flow cell.

The light transmission through the liquid is usually measured spectrophotometrically, for example by using a diode array spectrophotometers across the visible light spectrum (380 nm to 780 nm) at 10 nm resolution or less. This spectrophotometric approach allows for the use of internationally recognised colour coordinate systems, such as CIELAB and CIE xyY; with the subsequent mathematical translation of the colorimetric data to industry specific colour scales, as referenced by standardising bodies such as ISO, CIE, AOCS, ASTM and DGF.

### Summary

According to a first aspect, the present invention resides in a flow cell for a colour measurement system. The flow cell comprises a body, a fluid inlet for accepting an inflow of a fluid, a fluid outlet for providing an outflow of the fluid, and a fluid pathway through the body of the flow cell that joins the fluid inlet and the fluid outlet, and thereby allows fluid to flow from the fluid inlet to the fluid outlet. An entrance window is provided for allowing light transmission into the flow cell, wherein the entrance window is fixedly coupled to the body of the flow cell. The flow cell also comprises a coupler configured to couple a light source to the flow cell, wherein the coupler is carried by a coupler mount that attaches to the body of the flow cell independently of the entrance window.

Such an arrangement is advantageous as the coupler is carried by the coupler mount that attaches to the body of the flow cell. Moreover, the coupler mount attaches to the body of the flow cell independently of the entrance window. This allows better precision in positioning the coupler as it avoids alignment problems that arise when mounting to the window when the window's position is relatively inaccurate due to an associated gasket. This precision may be aided by the coupler mount attaching to the body of the flow cell without needing to form a seal.

Optionally, the coupler is configured to support an optical guide, such as an optical fibre or a lightpipe, in a fixed alignment and position relative to the body on the flow cell. The coupler mount may be adapted to allow attachment to the body of the flow cell to ensure the correct position and alignment of the coupler. For example, wherein the coupler may be configured to support the optical guide centrally and the coupler mount may be adapted to attach to the body of the flow cell in positions that preserve the coupler's central position. The coupler mount may be secured to the body of the flow cell via bolts or screws that are arranged equidistantly from the centre of the coupler where the optical guide is supported.

Optionally, the flow cell further comprises an entrance window mount carrying the entrance window, wherein the entrance window mount comprises attachment means to allow the entrance window to be removably attached to the body of the flow cell. The attachment means may comprise a screw thread that mates with a cooperating screw thread of the body. An inner surface of the entrance window may define part of the fluid pathway, and the entrance window mount may form a seal to prevent fluid escaping from the fluid pathway. The entrance window mount may screw onto the body of the flow tube to compress a gasket interposed between the body and the entrance window mount, thereby forming the seal.

The entrance window may be located within a recess in the body of the flow cell. The recess may be at least partly defined by a flange, and the coupler mount may attach to the flange. The coupler and coupler mount may be completely separated from the entrance window and entrance window mount by a gap. For example, the entrance window may be wholly located within the recess, and the entrance window and entrance window mount may sit proud of the recess thereby creating the gap.

Optionally, the coupler may be positioned immediately adjacent the entrance window.

The entrance window and entrance window mount may comprise a window fused to a holder. Such an arrangement avoids the need for a gasket between the window and the holder. The entrance window may comprise glass such as borosilicate glass. The entrance window mount may comprise a metal holder such as a stainless steel holder.

The coupler may include a collimating lens, operable to collimate the light entering the flow cell. Also, the coupler mount may comprise a filter holder configured to hold an optical filter between the coupler and the entrance window. This optical filter may be used to test and calibrate the colour measurement system.

The coupler may be configured to support an optical guide in a fixed orientation and position relative to the body of the flow cell such that light from the light source passes through the fluid pathway along an optical axis. The entrance window mount may be configured to hold entrance window at a right angle to the optical axis.

Optionally, the flow cell further comprises an exit window for allowing light transmission out from the flow cell, wherein the entrance window and the exit window are arranged to face each other across at least a portion of the fluid pathway such that light travels along the optical axis from the entrance window to the exit window. The exit window may be fixedly coupled to the body of the flow cell. The flow cell may further comprise an optical collector configured to collect light passing through at least a portion of the exit window and to pass the collected light to an optical detector, wherein the optical collector is carried by a collector mount that attaches to the body of the flow cell independently of the exit window. Again, this allows greater accuracy in positioning and alignment, this time of the optical collector. The collector may be configured to support an optical guide in a fixed orientation and position relative to the body on the flow cell. The collector mount may be adapted to allow attachment to the body of the flow cell to ensure the correct position and alignment of the collector. The collector may be configured to support the optical guide centrally and the collector mount is adapted to attach to the body of the flow cell in positions that preserve the collector's central position. The collector mount may be secured to the body of the flow cell via bolts or screws that are arranged equidistantly from the centre of the collector where the optical guide is supported.

The flow cell may further comprise an exit window mount carrying the exit window, wherein the exit window mount comprises attachment means to allow the exit window to be removably attached to the body of the flow cell. The attachment means may comprise a screw thread that mates with a cooperating screw thread of the body. An inner surface of the exit window may define part of the fluid pathway, and the exit window mount may form a seal to prevent fluid escaping from the fluid pathway. The exit window mount may screw onto the body of the flow tube to compress a gasket interposed between the body and the exit window mount. The exit window may be located within a recess in the body of the flow cell, the recess may be at least partly defined by a flange, and the collector mount may attach to the flange. The collector and collector mount may be completely separated from the exit window and exit window mount by a gap. The collector may be positioned immediately adjacent the exit window. The collector mount may attach to the body of the flow cell without forming a seal. The exit window and exit window mount may comprise a window fused to a holder, such as a glass window fused to a metal holder, for example a borosilicate glass window fused to a stainless steel holder. The collector may include a collecting lens and a collimating lens.

The present invention also resides in a colour measurement system comprising a light source, light directing means, any of the flow cells described above, light collection means and a light detector. The light directing means is configured to direct the light from the light source to the entrance window and the light collection means is configured to direct light exiting the flow cell to the light detector. The light directing means may comprise an optical guide (such as an optical fibre or lightpipe) and/or a lens (such as a collimating lens). The light collection means may comprise one or more lenses (such a biconvex lens and/or a collimating lens) and/or an optical guide (such as an optical fibre or lightpipe). The light detector may be a spectrophotometer(s) such a diode array spectrophotometers.

According to a second aspect, the present invention resides in a flow cell for a colour measurement apparatus. The flow cell comprises a fluid inlet for accepting an inflow of a fluid, a fluid outlet for providing an outflow of the fluid, and a fluid pathway joining the fluid inlet and the fluid outlet, and thereby allowing fluid to flow from the fluid inlet to the fluid outlet. The flow cell also comprises an entrance window for allowing light transmission into the flow cell, and an exit window for allowing light transmission out from the flow cell. The entrance window and the exit window are arranged to face each other across at least a portion of the fluid pathway such that light passing from the entrance window to the exit window passes through fluid flowing along the fluid pathway from the fluid inlet to the fluid outlet. The fluid pathway comprises a tapering bore with a relatively wide cross-section at a first end and a relatively narrow cross-section at a second end, with the first end being located closer to the fluid inlet than the fluid outlet and the second end being located closer to the fluid outlet than the fluid inlet.

Such a tapering bore that narrows in the direction of fluid flow leads to a pressure differential. This, in turn, leads to faster fluid flow which reduces the formation of dead spots in the fluid flow through the flow cell.

The fluid pathway may comprises a frustro-conical bore extending from the first end to the second end. The side wall of the frustro-conical bore may converge at an angle of 0.5° to 10°, or 0.75° to 5°, or 1°. Also, creating the pressure differential may be further aided by providing a bore of the fluid outlet that has a smaller cross-sectional area than the bore of the fluid inlet.

Optionally, the fluid inlet is located adjacent to one of the entrance window and exit window, and the fluid outlet is located adjacent to the other of the entrance window and exit window. This ensures strong fluid flow past the windows which helps keep the windows clean. For example, one side of the bore of the fluid inlet may be aligned with one of the entrance window and exit window, and one side of the fluid outlet may be located adjacent to the other of the entrance window and exit window.

The first end of the tapering bore may be formed by one of the entrance window and the exit window, the second end of the tapering bore may be formed by the other of the entrance window and the exit window. The entrance window and the exit window may have flat surfaces that form the first end and second end, and the flat surfaces may be aligned to be parallel.

Optionally, the fluid inlet is arranged to discharge fluid through the side wall of the tapering bore and the fluid outlet is arranged to receive fluid through the side wall of the tapering bore. The fluid inlet may comprise a fluid inlet channel and the fluid outlet may comprise a fluid outlet channel. The longitudinal axes of the fluid inlet channel and fluid outlet channel may be aligned at right angles to the longitudinal axis of the tapering bore of the fluid pathway.

The present invention also resides in a colour measurement system comprising a light source, light directing means, any of the flow cells according of the second aspect of the invention, light collection means and a light detector, wherein the light directing means is configured to direct the light from the light source to the entrance window and the light collection means is configured to direct light exiting the exit window to the light detector

The light directing means may comprise an optical fibre and/or a lens (such as a collimating lens). The light collection means may comprise one or more lenses (such a biconvex lens and/or a collimating lens) and/or an optical fibre. The light detector may be a spectrophotometer(s) such a diode array spectrophotometers.

There is also provided flow cells and colour measurement systems according to the following clauses.
1. A flow cell for a colour measurement system, comprising:
   a body;
   a fluid inlet for accepting an inflow of a fluid;
   a fluid outlet for providing an outflow of the fluid;
   a fluid pathway through the body of the flow cell that joins the fluid inlet and the fluid outlet, and thereby allows fluid to flow from the fluid inlet to the fluid outlet;
   an entrance window for allowing light transmission into the flow cell, wherein the entrance window is fixedly coupled to the body of the flow cell; and
   a coupler configured to couple a light source to the flow cell, wherein the coupler is carried by a coupler mount that attaches to the body of the flow cell independently of the entrance window.
2. The flow cell of clause 1, wherein the coupler is configured to support an optical guide in a fixed alignment and position relative to the body of the flow cell and, optionally, the optical guide is an optical fibre.
3. The flow cell of clause 2, wherein the coupler mount is adapted to allow attachment to the body of the flow cell to ensure the correct position and alignment of the coupler.
4. The flow cell of clause 3, wherein the coupler is configured to support the optical guide centrally and the coupler mount is adapted to attach to the body of the flow cell in positions that preserve the coupler's central position.
5. The flow cell of clause 4, wherein the coupler mount is secured to the body of the flow cell via bolts or screws that are arranged equidistantly from the centre of the coupler where the optical guide is supported.
6. The flow cell of any preceding clause, further comprising an entrance window mount carrying the entrance window, wherein the entrance window mount comprises attachment means to allow the entrance window to be removably attached to the body of the flow cell.
7. The flow cell of clause 6, wherein the attachment means comprise a screw thread that mates with a cooperating screw thread of the body.
8. The flow cell of clause 6 or 7, wherein an inner surface of the entrance window defines part of the fluid pathway, and the entrance window mount forms a seal to prevent fluid escaping from the fluid pathway.
9. The flow cell of clause 8, wherein the entrance window mount screws onto the body of the flow cell to compress a gasket interposed between the body and the entrance window mount.
10. The flow cell of any of clauses 6 to 9, wherein the entrance window is located within a recess in the body of the flow cell, the recess is at least partly defined by a flange, and the coupler mount attaches to the flange.
11. The flow cell of clause 10, wherein the coupler and coupler mount are completely separated from the entrance window and entrance window mount by a gap.
12. The flow cell of clause 11, wherein the coupler is positioned immediately adjacent the entrance window.
13. The flow cell of any preceding clause, wherein the coupler mount attaches to the body of the flow cell without forming a seal.
14. The flow cell of any preceding clause, wherein the entrance window and entrance window mount comprise a borosilicate glass window fused to a stainless steel holder.
15. The flow cell of any preceding clause, wherein the coupler includes a collimating lens.
16. The flow cell of any preceding clause, wherein the coupler mount comprises a filter holder configured to hold an optical filter between the coupler and the entrance window.
17. The flow cell of any preceding clause, wherein the coupler is configured to support an optical guide in a fixed orientation and position relative to the body on the flow cell such that light from the light source passes through the fluid pathway along an optical axis.
18. The flow cell of clause 17, wherein the entrance window mount is configured to hold entrance window at right angle to the optical axis.
19. The flow cell of clause 17 or 18, further comprising an exit window for allowing light transmission out from the flow cell, wherein the entrance window and the exit window are arranged to face each other across at least a portion of the fluid pathway such that light travels along the optical axis from the entrance window to the exit window.
20. The flow cell of clause 19, wherein the exit window is fixedly coupled to the body of the flow cell, and further comprising an optical collector configured to collect light passing through at least a portion of the exit window and to pass the collected light to an optical detector, wherein the optical collector is carried by an optical collector mount that attaches to the body of the flow cell independently of the exit window.
21. The flow cell of clause 20, wherein the optical collector is configured to support an optical fibre in a fixed orientation and position relative to the body on the flow cell.
22. The flow cell of clause 21, wherein the optical collector mount is adapted to allow attachment to the body of the flow cell to ensure the correct position and alignment of the optical collector.
23. The flow cell of clause 22, wherein the optical collector is configured to support the optical guide centrally and the optical collector mount is adapted to attach to the body of the flow cell in positions that preserve the optical collector's central position.
24. The flow cell of clause 23, wherein the optical collector mount is secured to the body of the flow cell via bolts or screws that are arranged equidistantly from the centre of the optical collector where the optical guide is supported.
25. The flow cell of any of clauses 19 to 24, further comprising an exit window mount carrying the exit window, wherein the exit window mount comprises attachment means to allow the exit window to be removably attached to the body of the flow cell.
26. The flow cell of clause 25, wherein the attachment means comprise a screw thread that mates with a cooperating screw thread of the body.
27. The flow cell of clause 25 or 26, wherein an inner surface of the exit window defines part of the fluid pathway, and the exit window mount forms a seal to prevent fluid escaping from the fluid pathway.
28. The flow cell of clause 27, wherein the exit window mount screws onto the body of the flow cell to compress a gasket interposed between the body and the exit window mount.
29. The flow cell of any of clauses 25 to 28, wherein the exit window is located within a recess in the body of the flow cell, the recess is at least partly defined by a flange, and the optical collector mount attaches to the flange.
30. The flow cell of clause 29, wherein the optical collector and optical collector mount are completely separated from the exit window and exit window mount by a gap.
31. The flow cell of clause 30, wherein the optical collector is positioned immediately adjacent the exit window.
32. The flow cell of clause 31, wherein the optical collector mount attaches to the body of the flow cell without forming a seal.
33. The flow cell of any of clauses 25 to 32, wherein the exit window and exit window mount comprise a borosilicate glass window fused to a stainless steel holder.
34. The flow cell of any of clauses 20 to 33, wherein the optical collector includes a collecting lens and a collimating lens.
35. A colour measurement system comprising a light source, light directing means, the flow cell of any preceding clause, light collection means and a light detector, wherein the light directing means is configured to direct the light from the light source to the entrance window and the light collection means is configured to direct light exiting the flow cell to the light detector.
36. The flow cell of any of clauses 20 to 34, further comprising:
   an exit window for allowing light transmission out from the flow cell; and wherein:
   the entrance window and the exit window are arranged to face each other across at least a portion of the fluid pathway such that light passing from the entrance window to the exit window passes through fluid flowing along the fluid pathway from the fluid inlet to the fluid outlet; and
   the fluid pathway comprises a tapering bore with a relatively wide cross-section at a first end and a relatively narrow cross-section at a second end, with the first end being located closer to the fluid inlet than the fluid outlet and the second end being located closer to the fluid outlet than the fluid inlet.
36A.A flow cell for a colour measurement apparatus, comprising:
   a fluid inlet for accepting an inflow of a fluid;
   a fluid outlet for providing an outflow of the fluid;
   a fluid pathway joining the fluid inlet and the fluid outlet, and thereby allowing fluid to flow from the fluid inlet to the fluid outlet;
   an entrance window for allowing light transmission into the flow cell; and
   an exit window for allowing light transmission out from the flow cell; and wherein:
      the entrance window and the exit window are arranged to face each other across at least a portion of the fluid pathway such that light passing from the entrance window to the exit window passes through fluid flowing along the fluid pathway from the fluid inlet to the fluid outlet; and
      the fluid pathway comprises a tapering bore with a relatively wide cross-section at a first end and a relatively narrow cross-section at a second end, with the first end being located closer to the fluid inlet than the fluid outlet and the second end being located closer to the fluid outlet than the fluid inlet.
37. The flow cell of clause 36 or 36A, wherein the fluid pathway comprises a frustro-conical bore extending from the first end to the second end.
38. The flow cell of clause 37, wherein the side wall of the frustro-conical bore converge at an angle of 0.5° to 10°, or 0.75° to 5°, or 1°.
39. The flow cell of any of clauses 36, 36A, 37 or 38, wherein the bore of the fluid outlet has a smaller cross-sectional area than the bore of the fluid inlet.
40. The flow cell of any of clauses 36, 36A, 37, 38 or 39, wherein the fluid inlet is located adjacent to one of the entrance window and exit window, and the fluid outlet is located adjacent to the other of the entrance window and exit window.
41. The flow cell of clause 40, wherein one side of the bore of the fluid inlet is aligned with one of the entrance window and exit window, and one side of the fluid outlet is located adjacent to the other of the entrance window and exit window.
42. The flow cell of any of clauses 36, 36A, 37, 38, 39, 40 or 41, wherein the first end of the tapering bore is formed by one of the entrance window and exit window, the second end of the tapering bore is formed by the other of the entrance window and exit window.
43. The flow cell of clause 42, wherein the entrance window and exit window have flat surfaces that form the first end and second end, and the flat surfaces are aligned to be parallel.
44. The flow cell of any of clauses 36, 36A, 37, 38, 39, 40, 41, 42 or 43, wherein the fluid inlet is arranged to discharge fluid through a side wall of the tapering bore and the fluid outlet is arranged to receive fluid through a side wall of the tapering bore.
45. The flow cell of clause 44, wherein the fluid inlet comprises a fluid inlet channel and the fluid outlet comprises a fluid outlet channel, and the longitudinal axes of the fluid inlet channel and fluid outlet channel are aligned at right angles to the longitudinal axis of the tapering bore of the fluid pathway.
46. A colour measurement system comprising a light source, light directing means, the flow cell of any of clauses 36, 36A, 37, 38, 39, 40, 41, 42, 43, 44 or 45, light collection means and a light detector, wherein the light directing means is configured to direct the light from the light source to the entrance window and the light collection means is configured to direct light exiting the exit window to the light detector.

### List of Figures

In order that the invention can be more readily understood, reference will now be made by way of example only, to the accompanying drawings in which:
Figure 1 is an assembled perspective view of a flow cell according to a first embodiment of the present invention;
Figure 2 is an alternate assembled perspective view of the flow cell of Figure 1;
Figure 3 is an exploded perspective view of the flow cell of Figure 1;
Figure 4 is an alternative exploded perspective view of the flow cell of Figure 1;
Figure 5 is a cross-section view of the main body of the flow cell of Figure 1;
Figure 6 is a cross-section view of the assembled flow cell of the flow cell of Figure 1;
Figure 7 is a schematic representation of optical arrangement of the flow cell of Figure 1;
Figure 8 is an assembled perspective view of the main body of a flow cell according to a second embodiment of the present invention;
Figure 9 is a cross-section view of the main body of the flow cell of Figure 8;
Figure 10 is an assembled perspective view of the main body of a flow cell according to a third embodiment of the present invention; and
Figure 11 is a cross-section view of the main body of the flow cell of Figure 10.

### Detailed Description

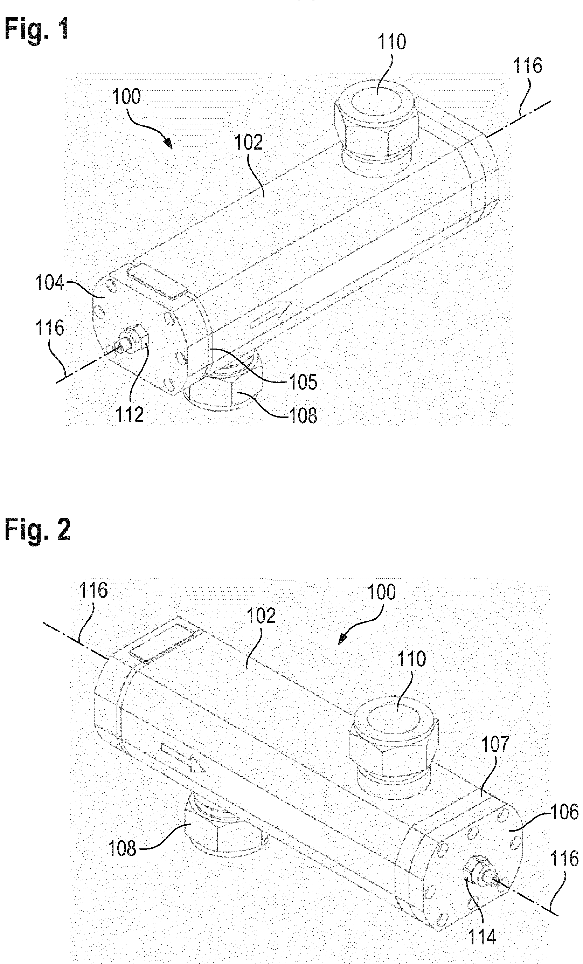

A flow cell 100 according to a first embodiment of the present invention is shown in it assembled form in Figures 1 and 2. The flow cell 100 comprises an elongate body 102 bounded at each end by end cap assemblies, namely an upstream outer end cap 104 and a downstream outer end cap 106. An upstream inner end cap 105 and a downstream inner end cap 107 separate the body 102 from the upstream outer end cap 104 and the downstream outer end cap 106 respectively.

A fluid inlet 108 and a fluid outlet 110 are provided on the bottom and top of the body 102 respectively, with the inlet 108 being located adjacent the upstream inner end cap 105 and the outlet 110 being located adjacent the downstream inner end cap 107. The inlet 108 is provided with a fitting, such as a Swagelok^{®} fitting, to allow connection to a fluid carrying pipe (not shown) that delivers fluid under pressure to the flow cell 100. Similarly, the outlet 110 is provided with a fitting, such as a Swagelok^{®} fitting, to allow connection to a fluid carrying pipe (not shown) that carries the fluid away from the flow cell 100.

The upstream outer end cap 104 is provided with an inbound optical coupler 112 and the downstream outer end cap 106 is provided with an outbound optical coupler 114, that form part of an optical system 148 that measures the colour of fluid flowing through the flow cell 100. Light from a light source (not shown), such as a laser, travels to the flow cell 100 along an inbound optical fibre 136, through the inbound optical coupler 112, across part of the flow path between the fluid inlet 108 and fluid outlet 110, through the outbound optical coupler 114, and along an outbound optical fibre 138 to a detector (not shown). Hence, the inbound optical coupler 112 and the outbound optical coupler 114 are aligned along an optical axis 116 that extends through the flow cell 100 along the longitudinal axis of the body 102.

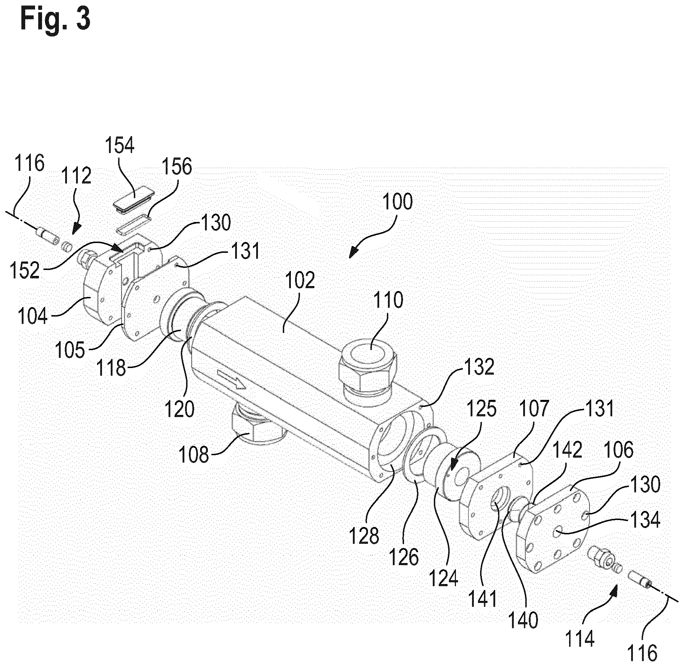

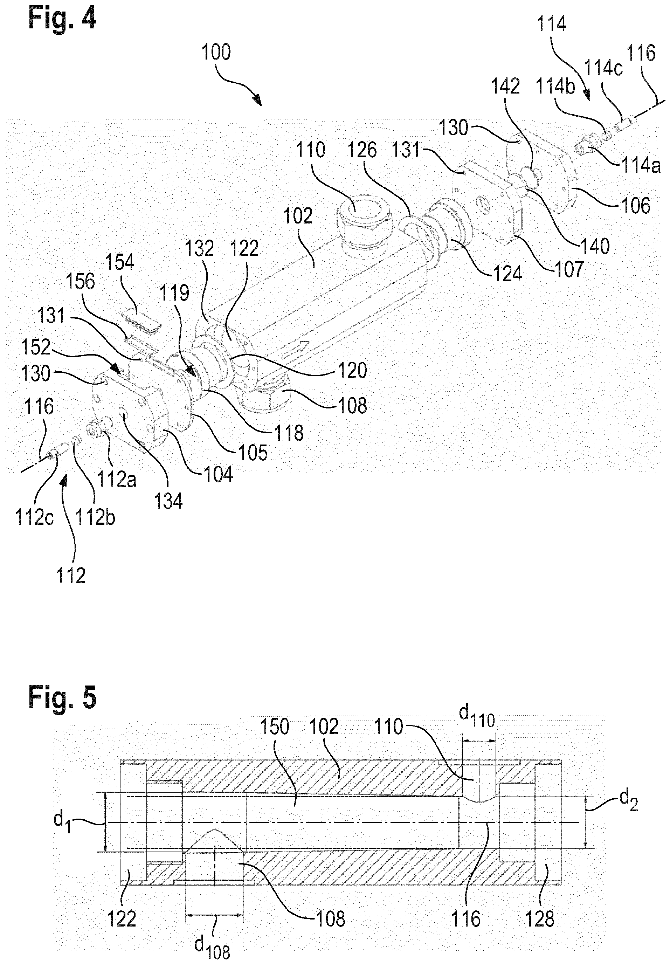

The exploded views of Figures 3 and 4 show the optical connections in greater detail. The inbound optical coupler 112 comprises three parts, namely a coupler body 112a, a collimating lens 112b (such as an achromatic lens) and a connector part 112c (such as a SMA fibre connector). The collimating lens 112b is glued inside the coupler body 112a, and the coupler body 112a screws into the threaded central aperture 134 in the upstream outer end cap 104. One end of the connector part 112c moves axially within the coupler body 112a. The coupler body 112a contains a grub screw (not shown) that bears against the side of the connector part 112c to hold the connector part 112c at the desired axial position. The other end of the connector part 112c is provided with an external thread that allows the end of the optical fibre 136 to be secured in position within the connector part 112c. In this respect, the end of the optical fibre 136 may be provided with an SMA fibre connector.

The outbound coupler 114 is of a corresponding design and hence also a coupler body 114a, a collimating lens 114b (such as an achromatic lens) and a connector part 114c.

Figures 3 and 4 also show that the upstream inner end cap 105 covers an entrance window assembly 118. The entrance window assembly 118 comprises a glass window fused to a holder which eliminates the need for a gasket around the glass window. For example, a borosilicate glass may be fused to a stainless steel holder. Such window assemblies 118 are available from Visilume of Glossop, UK (www.visilume.com). The entrance window assembly 118 seats in a recess 122 formed in the upstream end of the body 102. The entrance window assembly 118 is provided with a threaded peripheral portion (not shown) that co-operates with a complementary thread provided on an internal thread encircling the recess 122 such that the entrance window assembly 118 may be screwed onto the body 102. To prevent fluid leaking from the flow cell 100, a gasket 120 (such as a PTFE gasket) is sandwiched between flanges provided on the entrance window assembly 118 and the body 102. A pair of holes 119 (one of which is visible in Figure 4) are provided in the outer face of the entrance window assembly 118. These holes 119 receive a tool that is used to screw the entrance window assembly 118 tightly into place, thereby compressing the gasket 120 and forming the required fluid-tight seal.

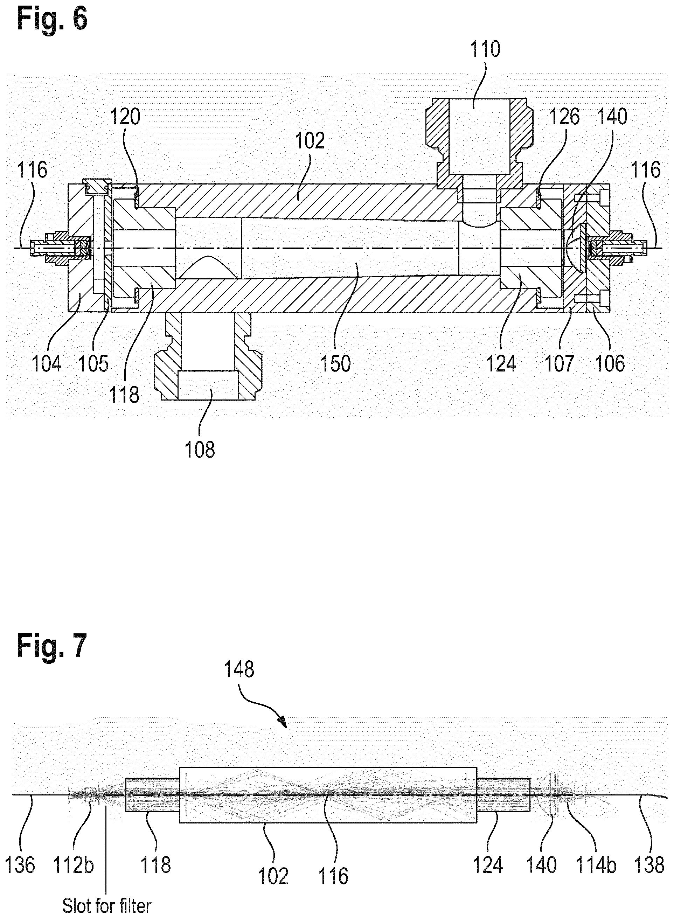

The entrance window assembly 118 is top-hat shaped, and the recess 122 has a corresponding shape to receive the entrance window assembly 118. A small clearance is provided between the recess 122 and the entrance window assembly 118 to aid in positioning the entrance window assembly 118 such that the glass window is held at a right angle to the optical axis 116, and with the optical axis 116 passing through the centre of the glass window. The depth of the recess 122 and the height of the entrance window assembly 118 is such that the whole of the entrance window assembly 118 sits the recess 122 provided in the upstream end of the body 102, as best seen in Figure 6.

As can be clearly seen from Figures 3, 4 and 6, the flow cell 100 is provided with an exit window assembly 124 that screws into a further recess 128 provided in the downstream end of the body 102 to compress a further gasket 126 (such as a PTFE gasket), in the same way as for the upstream end of the body 102. The exit window assembly 124 is also provided with a pair of holes 125 to allow the tool mentioned above to be used to screw the exit window assembly 124 into the recess 128.

Advantageously, the mounting of the optical couplers 112 and 114 to the main body 102 is independent of the mounting of the window assemblies 118 and 124 to the main body 102. The optical couplers 112 and 114 mount to the outer end caps 104 and 106, and the outer end caps 104 and 106 attach to the body 102 of the flow cell 100 in a way that is independent of the window assemblies 118 and 124. How this is achieved will now be described with respect to the upstream end of the body 102.

The upstream end of the body 102 is provided with two end caps, namely the upstream outer end cap 104 and the upstream inner end cap 105. A two-piece construction is used to allow further components to be mounted between the upstream outer and inner end caps 104 and 105, as will be described below, although a single piece upstream end cap could be used instead.

The upstream outer and inner end caps 104 and 105 abut against each other when mounted to the body 102, and are attached to the body 102 by bolts (six in this embodiment). Bolt holes 130 and 131 are provided in the peripheries of the upstream outer and inner end caps 104 and 105 respectively at corresponding locations so that the upstream outer and inner end caps 104 and 105 are aligned with their centres residing on the optical axis 116 when bolted to the body 102. The upstream end of the body 102 is provided with six blind threaded bolt holes 132 around the rim that defines the recess 122 in which entrance window assembly 118 resides. The bolts extend through the bolt holes 130 and 131. The bolt holes 130 provided in the upstream outer end cap 104 are stepped such that tightening the bolts presses the upstream outer end cap 104 against the upstream inner end cap 105 which in turn is pressed against the body 102. The upright end faces of the upstream outer and inner end caps 104 and 105 and the body 102 are provided with precision flattened flanges that ensure the upright end faces of the upstream outer and inner end caps 104 and 105 and the body 102 abut against each other with a precise orientation where the upstream outer and inner end caps 104 and 105 are both held at right angles to the optical axis 116. In addition, as the entrance window assembly 118 forms the fluid-tight seal to the upstream end of the body 102, the upstream outer and inner end caps 104 and 105 do not need to form a fluid-tight seal. This means that gaskets are not required between the upstream outer and inner end caps 104 and 105 and the body 102. Removing the need for gaskets is highly advantageous as gaskets would otherwise compromise the alignment of the upstream outer and inner end caps 104 and 105 due to the unpredictability in how the resilient gaskets would deform.

As can be clearly seen from Figures 3, 4 and 6, the flow cell 100 is provided with a similar arrangement of end caps 106 and 107 at the downstream end of the body 102.

In conventional flow cell designs, the optical couplers 112 and 114 are mounted to the entrance and exit windows 118 and 124, and so are subject to alignment inaccuracies caused by the variation in position in the entrance and exit windows 118 and 124 caused by the imprecise compression of the gaskets 120 and 126. In contrast, embodiments of the present invention see the optical couplers 112 and 114 coupled to the outer end caps 104 and 106. As just described, the precision achievable when positioning and aligning the outer end caps 104 and 106 is far greater as no resilient gaskets are used in these connections.

As described above, the collimating lens 112b is glued into position in the coupler body 112a, to adopt the correct alignment straight down the optical axis 116 that extends through the body 102 of the flow cell 100. The collimating lens 114b of the outbound optical coupler 114 is also glued into position such that it is also aligned with the optical axis 116, and faces the collimating lens 112b of the inbound optical coupler 112. Also, the inbound optical fibre 136 screws fully onto the connector part 112c to make a secure connection. In turn, the connector part 112c may move axially within the coupler body 112a to vary the axial separation of the optical fibre 136 and the collimating lens 112b. The connector part 112c is held at the desired axial position by the grub screw described above. This axial movement adjusts the distance from the end of the inbound optical fibre 136 to the collimating lens 112b, thereby altering the degree of collimation of the light beam.

Hence, light from a light source passes along the inbound optical fibre 136 and through the inbound collimating lens 112b, as can be seen in Figure 7. The light then passes through the entrance window 118 and through the body 102 of the flow cell 100. Some of the light leaves through the exit window 124 and passes through the collimating lens 114b of the outbound optical coupler 114, and then travels on along the outbound optical fibre 138. To ensure as much light as possible passes along the outbound optical fibre 138, a collection lens 140 (such as a biconvex lens) is placed between the exit window 124 and the outbound optical coupler 114, as shown in Figure 7.

The collection lens 140 is housed in a recess 141 provided in the downstream end face of the downstream inner end cap 107, and is held in place by the compressive force of the downstream outer end cap 106 being tightened into place with the six bolts: this compressive force acts on an o-ring 142 that acts to seat the collection lens 140 in its correct position and alignment in the recess 141. The collection lens 140 is held at a right angle to the optical axis 116, and with the centre of the collection lens 140 on the optical axis 116.

The collection lens 140 has a slightly smaller diameter than the exit glass window. This is because there is some optical distortion around the edge of the window glass where it is fused to the holder. For example, a 19 mm diameter glass window may be used to give a 15 mm useable diameter. Then a biconvex collection lens 140 with a 20 mm diameter and an active diameter of 12 mm may be used to collect more of the light and focus it down into the collimating lens 114b of the outbound optical coupler 114. Typical flow cells do not include such a collection lens, instead relying on the collimating lens 114b only which results in just the central 6 mm of the light beam being collected.

The optical system 148 sends light through the flow cell 100 such that the light passes along part of the flow path from the fluid inlet 108 to the fluid outlet 110. The light may be provided continuously or non-continuously, for example using a pulsed beam. The light received at the detector after passing through the fluid in the flow cell 100 is measured spectrophotometrically, for example by using diode array spectrophotometers, to determine the colour of the fluid in the flow cell 100 when the light passed through. The accuracy of this reading is affected by the flow of fluid through the flow cell 100. For example, dead spots in the flow cause mixing of the fluid such that the "age" of the fluid measured varies rather than being a true snapshot of the current fluid. Also, turbulence in the fluid flow can cause inaccuracies due to the creation of air bubbles.

The design of the flow cell 100 is carefully selected to optimise the flow of fluid through the flow cell 100. The flow cell 100 is provided with a central bore 150 that extends from the entrance window assembly 118 at the upstream end of the body 102 to the exit window assembly 124 at the downstream end of the body 102. The bore 150 tapers such that it narrows from a relatively wide diameter d₁ at the upstream end of the body 102 to a relatively wide diameter d₂ at the downstream end of the body 102. For example, the bore 150 may have a taper of 10°, or less than 10°. The inlet 108 and the outlet 110 extend through the sides of the body 102 to enter the tapering bore 150. The bore d₁₀₈ of the inlet 108 is matched to the size of the bore d₁ upstream end of the body 102, and the bore d₁₁₀ of the outlet 110 is matched to the size of the bore d₂ at the downstream end of the body 102, i.e. d₁₀₈=d₁ and d₁₁₀=d₂. Hence, the bore d₁₀₈ of the inlet 108 is larger than the bore d₁₁₀ of the outlet 110. The gradual decrease in the bore size from the inlet 108 to the outlet 110 creates a pressure differential across the flow cell 100 that increases flow speed and so minimises dead spots in the flow, particularly around the outlet 110.

In addition, the inlet 108 is positioned immediately adjacent the entrance window assembly 118 and the outlet 110 is positioned immediately adjacent the exit window assembly 124. Positioning the edge of each of the inlet 108 and outlet 110 as close to being in line with the inside faces of the window glass of each window assembly 118 and 124 ensures a constant flow of fluid past the window glasses which acts to keep the window glasses clean.

As best seen in Figures 3 and 4, the upstream outer end cap 104 and upstream inner end cap 105 form a slot 152 when secured together that extends from an upper aperture. The slot 152 is provided to receive filters (not shown) that can be inserted into the light beam, between the inbound optical coupler 112 and the entrance window assembly 118. These filters may be used to test and calibrate the colour measurement system. These filters may be used when the flow cell 100 is empty or filled with a very light coloured fluid for absolute transmittance measurements at initial setup, and also for relative measurements when there is a coloured fluid in the flow cell 100. The slot 152 is provided with a cover 154 that seats against an o-ring 156, thereby preventing debris from entering the slot 152. Alternatively, a one-piece cover 154 made of flexible plastic or rubber may be used.

A person skilled in the art will appreciate that the above embodiments may be varied in many different respects without departing from the scope of the present invention that is defined by the appended claims.

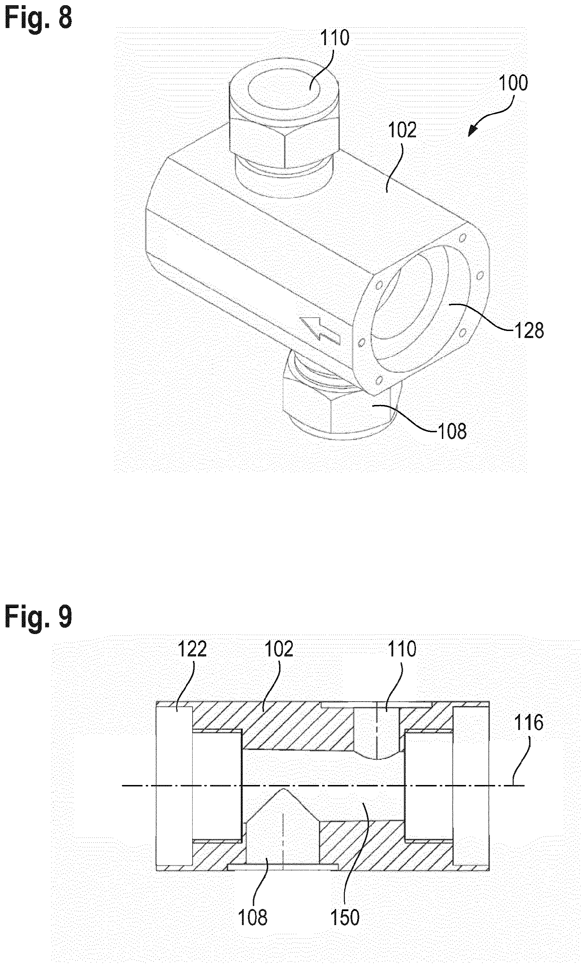

For example, flow cells 100 having different lengths may be used according to the transparency of the liquid being measured. Figures 8 and 9 show a flow cell 100 for use with a less transparent liquid, and so requiring a shorter path length of light through liquid flowing through the flow cell 100. Accordingly the length of the body 102 and hence the bore 150 is shorter in the flow cell 100 of Figures 8 and 9. The bore 150 still tapers from the upstream end of the body 102 to the downstream end. As before, the bore 150 may have a taper of 10°, or less than 10°. The bore of the inlet 108 is larger than that of the outlet 110, like the flow cell 100 of Figures 1 to 6. Hence, a pressure differential across the flow cell 100 is achieved to reduce the risk of dead spots. Otherwise, the design of the flow cell 100 of Figures 8 and 9 corresponds to that of Figures 1 to 6.

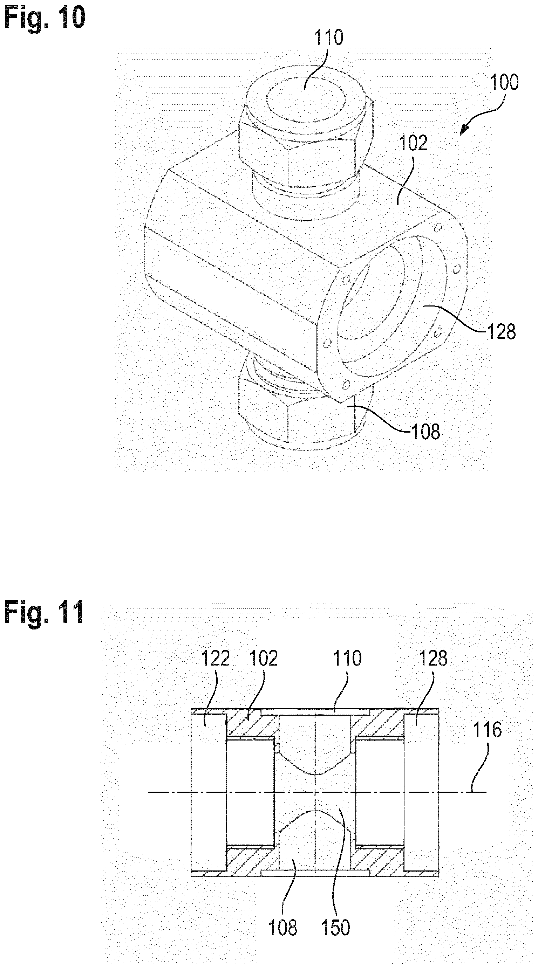

Figures 10 and 11 show another design of flow cell 100 that has an even shorter flow path between the inlet 108 and the outlet 110. In this flow cell 100, the inlet 108 and outlet 110 are placed directly opposite one another. This means that the light beam from the entrance window assembly 118 to the exit window assembly 124 extends across the flow path, rather than extending in line with the flow of fluid over a portion of the flow path through the flow cell 100. Also, the bore 150 extends in line with the inlet 108 and outlet 110, transverse to the light beam. The bore 150 may narrow from the inlet 108 to the outlet 110 or may not narrow due to the short length of the bore 150 in this embodiment. The bore of the inlet 108 is larger than that of the outlet 110, like the flow cells 100 of Figures 1 to 9. Hence, a pressure differential across the flow cell 100 is achieved to reduce the risk of dead spots, even though such dead spots are less likely with the direct flow path rather than the s-shaped flow path on the flow cells of Figures 1 to 9. Otherwise, the design of the flow cell 100 of Figures 10 and 11 corresponds to that of Figures 8 and 9.

While ten embodiments described above include inlets 108 and outlets 110 provided with Swagelok^{®} fittings, other fittings such as push-fit connections may be used.

The embodiments described above include two windows, one for light to enter and another for light to exit. However, only a single window may be used, through which light enters and exits. A mirror may be placed opposite the single window to reflect light back through the fluid and back out the single window. The reflected light may be directed back down the inbound optical fibre 136, or an outbound optical fibre 138 may be attached to a second optical coupler also mounted on the upstream outer end cap 104.

The embodiments described above have the entrance window 118 located at the upstream end of the flow cell 100 and the exit window 124 located at the downstream end of the flow cell 100. However, the positions may be swapped such that the entrance window 118 is located at the downstream end and the exit window 124 is located at the upstream end.

## Claims

1. A flow cell for a colour measurement system, comprising:
a body;
a fluid inlet for accepting an inflow of a fluid;
a fluid outlet for providing an outflow of the fluid;
a fluid pathway through the body of the flow cell that joins the fluid inlet and the fluid outlet, and thereby allows fluid to flow from the fluid inlet to the fluid outlet;
an entrance window for allowing light transmission into the flow cell, wherein the entrance window is fixedly coupled to the body of the flow cell; and
a coupler configured to couple a light source to the flow cell, wherein the coupler is carried by a coupler mount that attaches to the body of the flow cell independently of the entrance window.

2. The flow cell of claim 1, wherein the coupler is configured to support an optical guide in a fixed alignment and position relative to the body of the flow cell and, optionally, the optical guide is an optical fibre.

3. The flow cell of claim 2, wherein:
the coupler mount is adapted to allow attachment to the body of the flow cell to ensure the correct position and alignment of the coupler;
the coupler is configured to support the optical guide centrally and the coupler mount is adapted to attach to the body of the flow cell in positions that preserve the coupler's central position; and
the coupler mount is secured to the body of the flow cell via bolts or screws that are arranged equidistantly from the centre of the coupler where the optical guide is supported.

4. The flow cell of any preceding claim, further comprising an entrance window mount carrying the entrance window, wherein the entrance window mount comprises attachment means to allow the entrance window to be removably attached to the body of the flow cell.

5. The flow cell of claim 4, wherein an inner surface of the entrance window defines part of the fluid pathway, and the entrance window mount forms a seal to prevent fluid escaping from the fluid pathway.

6. The flow cell of claim 5, wherein the entrance window mount screws onto the body of the flow cell to compress a gasket interposed between the body and the entrance window mount.

7. The flow cell of any of claims 4 to 6, wherein the entrance window is located within a recess in the body of the flow cell, the recess is at least partly defined by a flange, and the coupler mount attaches to the flange.

8. The flow cell of claim 7, wherein the coupler and coupler mount are completely separated from the entrance window and entrance window mount by a gap and, optionally, the coupler is positioned immediately adjacent the entrance window.

9. The flow cell of any preceding claim, wherein the coupler mount attaches to the body of the flow cell without forming a seal.

10. The flow cell of any preceding claim, wherein the coupler includes a collimating lens.

11. The flow cell of any preceding claim, wherein the coupler mount comprises a filter holder configured to hold an optical filter between the coupler and the entrance window.

12. The flow cell of any preceding claim, wherein the coupler is configured to support an optical guide in a fixed orientation and position relative to the body on the flow cell such that light from the light source passes through the fluid pathway along an optical axis; and
the flow cell further comprises an exit window for allowing light transmission out from the flow cell, wherein the entrance window and the exit window are arranged to face each other across at least a portion of the fluid pathway such that light travels along the optical axis from the entrance window to the exit window.

13. The flow cell of claim 12, wherein the exit window is fixedly coupled to the body of the flow cell, and further comprising an optical collector configured to collect light passing through at least a portion of the exit window and to pass the collected light to an optical detector, wherein the optical collector is carried by an optical collector mount that attaches to the body of the flow cell independently of the exit window.

14. The flow cell of claim 13, wherein:
the optical collector is configured to support an optical guide in a fixed orientation and position relative to the body on the flow cell;
the optical collector mount is adapted to allow attachment to the body of the flow cell to ensure the correct position and alignment of the optical collector;
the optical collector is configured to support the optical guide centrally and the optical collector mount is adapted to attach to the body of the flow cell in positions that preserve the optical collector's central position; and
the optical collector mount is secured to the body of the flow cell via bolts or screws that are arranged equidistantly from the centre of the optical collector where the optical guide is supported.

15. A colour measurement system comprising a light source, light directing means, the flow cell of any preceding claim, light collection means and a light detector, wherein the light directing means is configured to direct the light from the light source to the entrance window and the light collection means is configured to direct light exiting the flow cell to the light detector.
